# EUROPÄISCHE PATENTANMELDUNG

(11) **EP 0 814 294 A1**
(43) Veröffentlichungstag der Anmeldung: **29.12.1997**
(21) Anmeldenummer: 97810364.6
(22) Anmeldetag: 11.06.1997
(51) Int. Cl.: F16L 41/03, F16L 39/00

(54) **Anschlussvorrichtung**

(30) Priorität: 20.06.1996 CH 1538/96
(71) Anmelder: Gebrüder Tobler AG, 8902 Urdorf (CH)
(72) Erfinder: Ballmer, Edgar, 8903 Birmensdorf (CH)
(74) Vertreter: Schmauder, Klaus Dieter

(57) **Zusammenfassung**

Die Anschlussvorrichtung enthält eine Kammer (2) mit einem Hauptanschlussstutzen (6) und Nebenanschlussstutzen (8), zwischen denen eine Trennwand (18) angeordnet ist. Beidseits der Trennwand (18) sind Hilfsanschlussstutzen (22) vorhanden, an denen eine Verbindungsleitung (24) zur Aufnahme von Zusatzbauteilen (34,36,38,40,42) angeordnet sind. Die Verbindungsleitung (24) ermöglicht einerseits einen einfachen Einbau der Zusatzbauteile und andererseits deren einfache Wartung und Ergänzung auch ohne Entleerung der gesamten Klimatisieranlage.

## Beschreibung

Die Erfindung betrifft eine Anschlussvorrichtung gemäss Oberbegriff des Anspruches 1.

Anschlussvorrichtungen der eingangs genannten Art sind bekannt und werden zum Beispiel bei Klimatisiervorrichtungen, wie Bodenheizungen verwendet. Zwei solche Anschlussvorrichtungen, eine für den Vorlauf und eine für den Rücklauf, werden über Regulierarmaturen, Tauchhülsen für Fühler, Wasserzähler für die Aufnahme eines Messteiles mittels Eisenrohren, Nippel und dergleichen zu einer Anschlusseinheit miteinande verbunden sind. Die Verbindungsteile können auch Norm-Anschlussteile, sogenannte Kugelhahnen mit integrierten Fühlern, ferner eine Regelarmatur für den Vorlauf und ein sogenanntes Kreuzstück für den ungehinderten Anschluss von Vor- und Rücklauf beinhalten. Solche Anschlusseinheiten sind relativ kompliziert.

Aufgabe der Erfindung ist es, eine Anschlussvorrichtung zu schaffen, die den einfachen Aufbau einer Anschlusseinheit ermöglicht.

Die Aufgabe wird gelöst durch die kennzeichnenden Merkmale des Anspruches 1. Durch die Unterteilung der Kammer und die Anordnung der Verbindungsleitung können die Bauteile, die sonst zwischen einem Vorlauf und einem Rücklauf anzuordnen sind, direkt in die Verbindungsleitung integriert werden, wodurch sich für eine Anschlusseinheit eine wesentliche Vereinfachung ergibt, da die Anzahl der Armaturen für die Anschlusseinheit reduziert werden können und sich eine erhöhte Einbausicherheit beziehungsweise Einbauvereinfachung für die Inbetriebnahme einer Klimatisiervorrichtung ergibt.

Vorteilhafte Ausgestaltungen der Anschlussvorrichtung sind in den Ansprüchen 2 bis 10 beschrieben.

Grundsätzlich kann die Kammer eine beliebige Form aufweisen, vorteilhaft ist jedoch eine Ausgestaltung nach Anspruch 2, die eine vereinfachte Ausbildung der Trennwand als Einsatz ermöglicht.

Auch für die Ausbildung der Verbindungsleitung ergeben sich verschiedene Ausgestaltungsmöglichkeiten, jedoch ist eine solche nach Anspruch 3 besonders bevorzugt.

Die Verbindungsleitung kann gemäss Anspruch 4 als Zusatzbauteil ein Passstück mit einem herausnehmbaren Sieb aufweisen, welches beispielsweise dazu dient, Verunreinigungen abzufangen, die beispielsweise während der Installation einer Klimatisieranlage entstanden sind. Das Sieb kann nach dem Probelauf und vor der endgültigen Inbetriebnahme der Klimatisieranlage gereinigt oder ausgebaut werden.

Die Verbindungsleitung kann gemäss den Ansprüchen 5 und/oder 6 als Zusatzbauteil einen Zähler, beispielsweise einen Wasserzähler, vorzugsweise einen Kapselzähler enthalten, um die verbrauchte Wärmemenge beziehungsweise Wassermenge zu erfassen. Ein solcher Kapselzähler kann beispielsweise während der Installation eingebaut werden und ebenfalls ein Sieb für die Aus filterung von Verunreinigungen enthalten. Ein solches Sieb wird dann bei der endgültigen Inbetriebnahme der Anlage entfernt.

Gemäss Anspruch 7 kann die Verbindungsleitung als Zusatzbauteil einen Anschlussstutzen für einen Temperaturfühler enthalten, um die Rücklauftemperatur des Wassers einer Klimatisieranlage zu messen.

Dem Anschlussstutzen, beispielsweise den Nebenanschlussstutzen und/oder den Hilfsanschlussstutzen für die Verbindungsleitung sind gemäss Anspruch 8 Absperrventile zugeordnet.

Gemäss Anspruch 9 weist mindestens eines der Absperrventile eine betätigbare Spindel und einen Absperrkegel auf, durch die eine koaxiale Bohrung verläuft, die auf der dem Absperrkegel abgewandten Seite mit einem Entlüftungsventil abgeschlossen ist. Ein solches Absperrventil ist vorzugsweise der Verbindungsleitung zugeordnet, um diese zu entlüften. Ein solches Absperrventil kann mit einem Handrad versehen sein, aber auch mit einem Oberteil für eine elektrothermische Regulierung. So kann auf einfache Weise eine Regulierung mittels eines thermischen Antriebes, zum Beispiel eines Raumthermostaten, erfolgen.

Gemäss Anspruch 10 ist die Anschlussarmatur vorzugsweise als Rücklaufsammler für eine Klimatisieranlage, vorzugsweise eine Flächenklimatisieranlage ausgebildet. Vorzugsweise bildet sie einen Teil eines Verteilers, das heisst einer Anschlusseinheit einer Klimatisieranlage, die in der Regel für eine Wohnungseinheit ausgelegt ist und so eine einfache Wohnungsgrundregulierung der Klimatisieranlage, die vorzugsweise eine Heizungsanlage ist, ermöglicht.

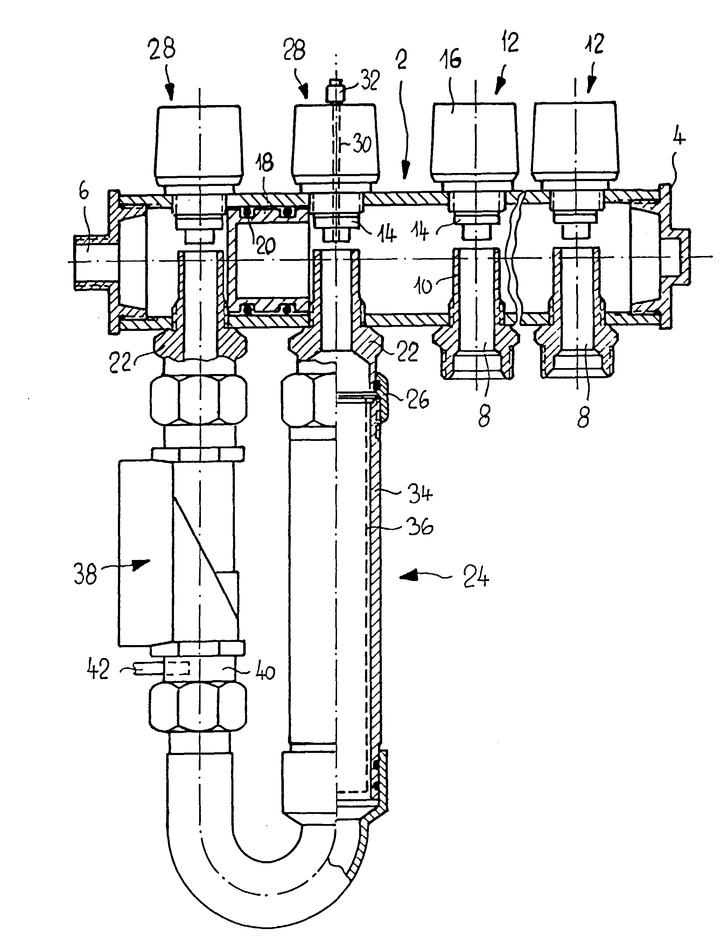

Ein Ausführungsbeispiel der erfindungsgemässen Anschlussvorrichtung wird nachfolgend anhand der Zeichnung näher beschrieben, die die Anschlussvorrichtung in teilweisem Vertikalschnitt zeigt.

Die in den Figuren dargestellte Anschlussvorrichtung ist als Rücklauf sammler für eine Klimatisieranlage, vorzugsweise eine Flächenklimatisieranlage, wie eine Fussbodenheizung einer Wohnungseinheit ausgebildet.

Die Anschlussvorrichtung enthält eine zylindrische Kammer 2, die auf einer Seite mittels eines Nippels 4 abgeschlossen ist und auf der gegenüberliegenden Seite einen Hauptanschlussstutzen 6 für eine Rücklaufleitung enthält. Auf der dem Nippel 4 zugewandten Seite sind an der Kammer 2 Nebenanschlussstutzen 8 für den Rücklauf einzelner Heizstränge angeordnet. Die Nebenanschlussstutzen enthalten im Inneren der Kammer zylindrische Stutzen 10, denen Absperrventile 12 zugeordnet sind, um den Durchfluss durch die Nebenanschlussstutzen 8 zu regulieren. Die Absperrventile 12 enthalten jeweils einen Absperrkegel 14 an einer nicht näher dargestellten Spindel, die durch ein Handrad 16 betätigbar ist. Anstelle des Handrades 16 können alle oder einzelne Absperrventile mit nicht näher dargestellten, jedoch bekannten elektrothermischen Bauteilen versehen sein, die beispielsweise von einem Raumthermostaten beeinflusst werden können.

Auf der dem Hauptanschlussstutzen 6 zugewandten Seite ist die Kammer 2 mit einer Trennwand 18 versehen, die aus einem zylindrischen Einsatz besteht, der mittels Dichtungen 20 gegen die Kammerwand abgedichtet ist. Beidseits der Trennwand 18 sind Hilfsanschlussstutzen 22, die analog den Nebenanschlussstutzen 8 ausgebildet sind und an denen eine Verbindungsleitung 24 mittels Überwurfmuttern 26 angeschlossen ist. Den Hilfsanschlussstutzen 22 sind wiederum Absperrventile 28 zugeordnet, wobei eines der Absperrventile eine koaxiale Bohrung 30 enthält, die durch den Absperrkegel 14 und das Handrad 16 verläuft und mittels eines Entlüftungsventils 32 abgeschlossen ist. Bei geschlossenen Absperrventilen 28 kann das Entlüftungsventil 32 zum Entlüften der Verbindungsleitung 24 dienen, sodass diese auf einfache Weise mittels der Überwurfmuttern montiert und demontiert werden kann.

Die U-förmige Verbindungsleitung 24 kann mit einem oder mehreren Zusatzbauteilen versehen sein, so beispielsweise mit einem Passstück 34, das ein Sieb 36 enthält, um Verunreinigungen, die insbesondere bei der Installation der Klimatisieranlage entstehen, abzufangen. Dem Passstück 34 ist am zweiten Schenkel der U-förmigen Verbindungsleitung 24 ein Zähler 38 nachgeschaltet, der beispielsweise ein bekannter Mengenzähler ist, um die Wassermenge und/oder die Wärmemenge zu zählen. Ein solcher Zähler ist beispielsweise ein bekannter Kapselzähler, der ebenfalls ein nicht näher dargestelltes Sieb enthalten kann, um Verunreinigungen abzufangen. Ausserdem kann die Verbindungsleitung 24 einen Anschlussstutzen 40 für einen Temperaturfühler 42 enthalten. Dieser Anschlussstutzen kann auch Teil des Zählers 38 sein.

Diese Ausgestaltung der Anschlussvorrichtung ermöglicht es, in der Verbindungsleitung 24 die für den Betrieb einer Klimatisieranlage erforderlichen Zusatzbauteile anzuordnen, wobei diese auch nach Anschluss der Anschlussvorrichtung in einer Anschlusseinheit auf einfachste Weise montiert und demontiert werden können, ohne die festen Installationen zur Verbindung eines Vorlaufverteilers und eines. Rücklaufsammlers demontieren und die Klimatisieranlage entleeren zu müssen. Die Verbindungsleitung 24 ermöglicht es somit, Zusatzbauteile durch einfache Demontage der Verbindungsleitung 24 von den Anschlussstutzen 22 zu warten und/oder zu ergänzen.

### BEZUGSZEICHENLISTE

- 2: Kammer
- 4: Nippel
- 6: Hauptanschlussstutzen
- 8: Nebenanschlussstutzen
- 10: zylindrischer Stutzen
- 12: Absperrventil
- 14: Absperrkegel
- 16: Handrad
- 18: Trennwand
- 20: Dichtung
- 22: Hilfsanschlussstutzen
- 24: Verbindungsleitung
- 26: Überwurfmutter
- 28: Absperrventil
- 30: Bohrung
- 32: Entlüftungsventil
- 34: Passstück
- 36: Sieb
- 38: Zähler
- 40: Anschlussstutzen
- 42: Temperaturfühler

## Patentansprüche

1. Anschlussvorrichtung mit einer Kammer (2) mit einem Hauptanschlussstutzen (6) und mindestens zwei Nebenanschlussstutzen (8), dadurch gekennzeichnet, dass zwischen dem Hauptanschlussstutzen (6) und den Nebenanschlussstutzen (8) zwei Hilfsanschlussstutzen (22) angeordnet sind, zwischen denen die Kammer (2) mittels einer Trennwand (18) unterteilt ist, wobei zu beiden Seiten der Trennwand (18) der Kammer (2) eine Verbindungsleitung (24) mit Mitteln zum Anschluss von Zusatzbauteilen (34,36,38,40, 42) angeschlossen ist.

2. Anschlussvorrichtung nach Anspruch 1, dadurch gekennzeichnet, dass die Kammer (2) zylindrisch ausgebildet ist und die Trennwand (18) durch einen vorzugsweise abgedichtet angeordneten Einsatz gebildet ist.

3. Anschlussvorrichtung nach Anspruch 1 oder 2, dadurch gekennzeichnet, dass die Verbindungsleitung (24) U-förmig ausgebildet ist.

4. Anschlussvorrichtung nach einem der Ansprüche 1 bis 3, dadurch gekennzeichnet, dass die Verbindungsleitung (24) als Zusatzbauteil ein Passstück (34) mit einem herausnehmbaren Sieb (36) aufweist.

5. Anschlussvorrichtung nach einem der Ansprüche 1 bis 4, dadurch gekennzeichnet, dass die Verbindungsleitung (24) als Zusatzbauteil einen Mengenzähler (38) enthält.

6. Anschlussvorrichtung nach einem der Ansprüche 1 bis 5, dadurch gekennzeichnet, dass die Verbindungsleitung (24) als Zusatzbauteil ein Gehäuse für einen Wärmezähler (38) enthält.

7. Anschlussvorrichtung nach einem der Ansprüche 1 bis 6, dadurch gekennzeichnet, dass die Verbindungsleitung (24) als Zusatzbauteil einen Anschlussstutzen (40) für einen Temperaturfühler (42) enthält.

8. Anschlussvorrichtung nach einem der Ansprüche 1 bis 7, dadurch gekennzeichnet, dass den Anschlussstutzen (8,22) je ein Absperrventil (12,28) zugeordnet ist.

9. Anschlussvorrichtung nach Anspruch 8, dadurch gekennzeichnet, dass mindestens ein Absperrventil (28) eine betätigbare Spindel und einen Absperrkegel (14) aufweist, durch die eine koaxiale Bohrung (30) verläuft, die auf der dem Absperrkegel abgewandten Seite mit einem Entlüftungsventil (32) abgeschlossen ist.

10. Anschlussvorrichtung nach einem der Ansprüche 1 bis 9, dadurch gekennzeichnet, dass sie als Rücklaufsammler für eine Klimatisieranlage, vorzugsweise einer Flächenklimatisieranlage ausgebildet ist.
